# EUROPÄISCHE PATENTSCHRIFT

(11) **EP 4 413 544 B1**
(45) Veröffentlichungstag und Bekanntmachung des Hinweises auf die Patenterteilung: **25.11.2026**
(21) Anmeldenummer: 22783299.5
(22) Anmeldetag: 09.09.2022
(51) Int. Cl.: G06V 10/82, G06V 20/56

(54) **VERFAHREN ZUM AUSFÜHREN EINER SICHERHEITSRELEVANTEN FUNKTION EINES FAHRZEUGES, COMPUTERPROGRAMMPRODUKT, SOWIE FAHRZEUG**
METHOD FOR EXECUTING A SAFETY-RELEVANT FUNCTION OF A VEHICLE, COMPUTER PROGRAM PRODUCT, AND VEHICLE
PROCÉDÉ D'EXÉCUTION D'UNE FONCTION DE SÉCURITÉ D'UN VÉHICULE, PRODUIT-PROGRAMME INFORMATIQUE ET VÉHICULE

(30) Priorität: 08.10.2021 DE 102021211357
(43) Veröffentlichungstag der Anmeldung: 14.08.2024
(73) Patentinhaber: VOLKSWAGEN AKTIENGESELLSCHAFT, 38440 Wolfsburg (DE)
(72) Erfinder: DOBBERPHUL, Timo, 38102 Braunschweig (DE)
(86) Internationale Anmeldenummer: PCT/EP2022/075146
(87) Internationale Veröffentlichungsnummer: WO 2023/057169

(56) Entgegenhaltungen:
- EP-A1- 3 671 550
- POMERLEAU DEAN A. ET AL: "Combining artificial neural networks and symbolic processing for autonomous robot guidance", ENGINEERING APPLICATIONS OF ARTIFICIAL INTELLIGENCE., vol. 4, no. 4, 1 January 1991 (1991-01-01), GB, pages 279 - 285, XP093008674, ISSN: 0952-1976, Retrieved from the Internet <URL:https://pdf.sciencedirectassets.com/271095/1-s2.0-S0952197600X00693/1-s2.0-0952197691900425/main.pdf?X-Amz-Security-Token=IQoJb3JpZ2luX2VjEMb//////////wEaCXVzLWVhc3QtMSJHMEUCICVY9PxR4BRR6e8q1o8cprY8tLy0q1RUNRmd1sA4CmTOAiEAwrWe1rwnWzTQhfAaR/mR+YL35b2yaLf+gVl4lYCUT1oq1QQI7///////////ARAFGgwwNTkwMDM1ND> [retrieved on 20221216], DOI: 10.1016/0952-1976(91)90042-5
- POMERLEAU D A: "RELIABILITY ESTIMATION FOR NEURAL NETWORK BASED AUTONOMOUS DRIVING", ROBOTICS AND AUTONOMOUS SYSTEMS, ELSEVIER BV, AMSTERDAM, NL, vol. 12, no. 3/04, 1 April 1994 (1994-04-01), pages 113 - 119, XP000443766, ISSN: 0921-8890, DOI: 10.1016/0921-8890(94)90018-3
- ANONYMOUS: "Künstliche Intelligenz - Wikipedia", 18 October 2022 (2022-10-18), XP055972710, Retrieved from the Internet <URL:https://de.wikipedia.org/wiki/Künstliche_Intelligenz> [retrieved on 20221019]

## Beschreibung

Die Erfindung betrifft ein Verfahren zum Ausführen einer sicherheitsrelevanten Funktion eines Fahrzeuges in einer aktuellen Fahrsituation des Fahrzeuges in Abhängigkeit von Eingangsdaten, ein Computerprogrammprodukt, sowie ein Fahrzeug.

Es ist bekannt, dass sich neuronale Netze insbesondere für Erkennungs- und Klassifikationsaufgaben in Bilddaten eignen. Diese Aufgaben können mit herkömmlicher Algorithmik häufig nicht gelöst werden. Neuronale Netze werden dazu in der Regel mit Trainingsdaten trainiert und können das Gelernte in der Anwendung dann auf neue Inputs übertragen.

Welche Eigenschaften des Eingaberaums zur Entscheidungsfindung im Netz führen ist dabei meistens zumindest teilweise unbekannt. Weiterhin ergeben sich aus der Komplexität der abgebildeten Realität oft unendlich oder nahezu unendlich viele Möglichkeiten, wie die Eingabedaten aussehen können. Dies ist auch als "Open World Problem" bekannt.

Gerade für sicherheitsrelevante Funktionen, ist es jedoch wünschenswert, vorhersagbare Ergebnisse zu produzieren. Beispielsweise aus der US 2019/0291720 A1 ist es bekannt, spezialisierte neuronale Netzwerke einzusetzen, welche zum Ausführen einer speziellen Fahrzeugfunktion trainiert sind. Weitere bekannte Schriften sind bspw. Pomerleau Dean A. et al: "Combining Artificial Neural Networks and Symbolic Processing for Autonomous Robot Guidance", Engineering Applications of Artificial Intelligence, Bd. 4, Nr. 4, pp. 279-285, 1991 und EP 3 671 550A1.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, eine Sicherheit eines Fahrzeugs bei einer sicherheitsrelevanten Funktion, insbesondere durch eine verbesserte Komplexitätsbewältigung beim Auswerten der Eingangsdaten, zu verbessern.

Die voranstehende Aufgabe wird gelöst durch ein Verfahren mit den Merkmalen des Anspruchs 1, ein Computerprogrammprodukt mit den Merkmalen des Anspruchs 6, sowie ein Fahrzeug mit den Merkmalen des Anspruchs 7. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Ausführen einer sicherheitsrelevanten Funktion eines Fahrzeuges in einer aktuellen Fahrsituation des Fahrzeuges in Abhängigkeit von Eingangsdaten, die durch ein Steuerungssystem mit mehreren, vorzugsweise drei oder mehr, Auswerteeinheiten auswertbar sind, vorgesehen. Die Auswerteeinheiten sind durch Trainingsdaten zumindest bis zu einem vordefinierten Vertrauenslevel jeweils für eine spezifische Fahrsituation trainiert. Bei dem Verfahren wird ferner Folgendes, insbesondere in Form von Verfahrensschritten, ausgeführt:
- Erfassen von Klassifikationsdaten der Eingangsdaten, insbesondere durch eine Logikeinheit des Steuerungssystems,
- Erkennen der aktuellen Fahrsituation in Abhängigkeit von den Klassifikationsdaten, insbesondere durch die Logikeinheit,
- Bestimmen einer priorisierten Auswerteeinheit der Auswerteeinheiten, welche für eine spezifische Fahrsituation trainiert ist, die eine, vorzugsweise vordefinierte Übereinstimmung, mit der aktuellen Fahrsituation aufweist, insbesondere durch die Logikeinheit,
- Auswerten der Eingangsdaten durch die priorisierte Auswerteeinheit,
- Ausführen der sicherheitsrelevanten Funktion in Abhängigkeit von dem Auswerten der Eingangsdaten, insbesondere durch die Logikeinheit und/oder eine Funktionseinheit des Fahrzeugs.

Bei dem Fahrzeug handelt es sich vorzugsweise um ein Kraftfahrzeug und/oder ein Luftfahrzeug. Das Verfahren wird insbesondere während des Betriebs des Fahrzeuges durchgeführt. Insbesondere befindet sich das Fahrzeug beim Ausführen der sicherheitsrelevanten Funktion in der aktuellen Fahrsituation, d.h. beispielsweise in einer aktuellen Verkehrssituation.

Das Steuerungssystem kann eine Recheneinheit, insbesondere in Form eines Prozessors und/oder Mikroprozessors, umfassen. Dabei kann das Steuerungssystem zum Steuern und/oder Regeln ausgebildet sein. Weiterhin kann das Steuerungssystem ein, vorzugsweise zentrales, Steuergerät des Fahrzeuges und/oder einen Server umfassen. Ferner ist es denkbar, dass es sich bei dem Steuerungssystem um ein verteiltes System handelt und das Steuerungssystem in eine Cloud integriert ist. Die Auswerteeinheiten könne modulartig in Hardware und/oder Software aufgebaut sein.

Bei den Eingangsdaten handelt es sich um Sensordaten des Fahrzeugs zur Analyse der aktuellen Fahrsituation. Vorzugsweise umfassen die Eingangsdaten Bilddaten einer Fahrzeugkamera des Fahrzeugs. Die Klassifikationsdaten umfassen eine Teilmenge der Eingangsdaten. Beispielsweise können die Klassifikationsdaten Bildausschnitte, Bildebenen und/oder dergleichen der Eingangsdaten umfassen. Beim Erkennen der aktuellen Fahrsituation kann die aktuelle Fahrsituation klassifiziert werden. Vorzugsweise wird für die vollständigen Sensordaten eine einzige priorisierte Auswerteeinheit bestimmt. Es ist jedoch ebenso denkbar, dass die Eingangsdaten und/oder die Klassifikationsdaten Sensordaten umfassen und/oder Teildaten von Sensordaten sind. Beispielsweise können die Eingangsdaten einen Bildausschnitt und/oder einen Pixel von Bilddaten der Sensordaten umfassen. Dabei kann für jeden Bildausschnitt und/oder jeden Pixel eine priorisierte Auswerteeinheit separat bestimmt werden.

Jede der Auswerteeinheiten ist dabei insbesondere durch einen individuellen Satz Trainingsdaten zum Auswerten der Eingangsdaten trainiert. Die jeweiligen Trainingsdaten sind insbesondere situationsspezifisch für die spezifische Fahrsituation. Beispielsweise kann eine der Auswerteeinheiten für eine spezielle Fahrsituation, die Regenwetter umfasst, eine andere der Auswerteeinheiten für eine spezielle Fahrsituation, die Schnee umfasst, und eine weitere der Auswerteeinheiten für eine spezielle Fahrsituation, die Sonnenschein umfasst, trainiert sein.

Zum Auswerten der Eingangsdaten durch die priorisierte Auswerteeinheit kann das Steuerungssystem, insbesondere die Logikeinheit, eine Umschaltlogik, insbesondere zum Routing der Eingangsdaten zur priorisierten Auswerteeinheit und/oder von der priorisierten Auswerteeinheit zur Funktionseinheit, aufweisen. Das Auswerten der Eingangsdaten kann beispielsweise eine Fußgängererkennung, eine Fahrbahnzustandserkennung, eine Verkehrszeichenerkennung und/oder eine Klassifikation von Verkehrsteilnehmern umfassen. Das Ausführen der sicherheitsrelevanten Funktion kann insbesondere ein Auslösen der sicherheitsrelevanten Funktion, ein Ansteuern einer Funktionseinheit für die sicherheitsrelevante Funktion und/oder ein Durchführen der sicherheitsrelevanten Funktion umfassen. Die sicherheitsrelevante Funktion kann beispielsweise eine Beeinflussung eines Fahrbetriebes und/oder eines Fahrweges des Fahrzeuges, wie z.B. eine Lenkung, eine Beschleunigung und/oder ein Abbremsen, umfassen. Wird beispielsweise beim Auswerten der Eingangsdaten ein Fußgänger erkannt, kann beim Ausführen der sicherheitsrelevanten Funktion eine Ausweichtrajektorie berechnet und/oder durch das Fahrzeug abgefahren werden.

Dabei sind alle Auswerteeinheiten mindestens bis zu dem Vertrauenslevel trainiert. Erfindungsgemäß korreliert das Vertrauenslevel zu einer Anforderung der sicherheitsrelevanten Funktion. Das Vertrauenslevel kann beispielsweise eine statistische Vertrauensgrenze zum korrekten Auswerten der spezifischen Fahrsituation umfassen. Beispielsweise kann das Vertrauenslevel einen Wahrscheinlichkeitswert umfassen, nach welcher das Auswerten der Eingangsdaten durch die jeweilige Auswerteeinheit ein erwartetes und/oder korrektes Ergebnis liefert, wenn die aktuelle Fahrsituation der jeweiligen, spezifischen Fahrsituation entspricht. Insbesondere kann jede der Auswerteeinheiten zum Nachweis des Vertrauenslevels mittels Testdaten und/oder in einem Kalibrierprozess getestet werden.

Beim Bestimmen der priorisierten Auswerteeinheit wird insbesondere die Auswerteeinheit aus der Menge der Auswerteeinheiten ausgewählt, deren Trainingsdaten zu der aktuellen Fahrsituation passen. Die Übereinstimmung kann eine vollständige oder teilweise Übereinstimmung sein. Vorzugsweise sind die spezifischen Fahrsituationen, für welche die Auswerteeinheiten trainiert sind, klassifiziert. Dadurch kann beim Bestimmen der priorisierten Auswerteeinheit eine Klassifikation der aktuellen Fahrsituation mit den Klassifikationen der spezifischen Fahrsituationen auf die Übereinstimmung überprüft werden. Vorzugsweise ist jede Klassifikation der spezifischen Fahrsituation eindeutig, so dass nur eine der Auswerteeinheiten in Abhängigkeit von der aktuellen Fahrsituation beim Bestimmen der priorisierten Auswerteeinheit die Übereinstimmung mit der aktuellen Fahrsituation aufweist.

Dadurch, dass alle Auswerteeinheiten mindestens das Vertrauenslevel aufweisen, ist insbesondere sichergestellt, dass das Auswerten der Eingangsdaten zumindest auf dem Niveau des Vertrauenslevels erfolgt. Durch die Spezialisierungen der Auswerteeinheiten auf die spezifischen Fahrsituationen können die Eingangsdaten somit situationsspezifisch ausgewertet werden. Dadurch kann die Menge aller möglichen Eingangsdaten für jede der Auswerteeinheiten reduziert werden, wodurch die einzelnen spezifischen Fahrsituationen eine reduzierte Komplexität aufweisen können. Durch das vordefinierte Vertrauenslevel kann dabei eine verbesserte Reproduzierbarkeit und/oder Genauigkeit beim Auswerten der Eingangsdaten für die sicherheitsrelevante Funktion ermöglicht sein.

Im Rahmen der Erfindung ist es weiterhin denkbar, dass eine Betriebsumgebung zum Ausführen der sicherheitsrelevanten Funktion definiert ist, welche, vorzugsweise vollständig, in Unterklassen zur Definition der spezifischen Fahrsituationen mit dem vordefinierten Vertrauenslevel anhand von Variationen innerhalb der Betriebsumgebung unterteilt ist, vorzugsweise wobei die Trainingsdaten der Auswerteeinheiten jeweils einer der Unterklassen zugeordnet sind. Insbesondere bilden die Trainingsdaten die Unterklassen ab. Durch die Unterklassen kann die Betriebsumgebung somit segmentiert sein. Die Betriebsumgebung kann beispielsweise eine Vorbedingung zum Ausführen der sicherheitsrelevanten Funktion umfassen. Dabei umfasst die Betriebsumgebung vorzugsweise alle möglichen Ereignisse und/oder Formen der Eingangsdaten. Durch die Unterteilung in Unterklassen kann die unendliche oder nahezu unendliche Menge von Ereignissen in eine endliche Anzahl von Teilmengen unterteilt sein, wodurch insbesondere eine verbesserte Bewältigung der Komplexität der Eingangsdaten ermöglicht wird. Beispielsweise kann die Betriebsumgebung eine Existenz von Fußgängern umfassen. Die Unterklassen können in diesem Fall z.B. Fußgänger mit kurzer Sommerbekleidung und langer Winterbekleidung umfassen, um mehrere Fälle erwarteter Bekleidungsarten abzudecken. Jede der Unterklassen kann somit eine Äquivalenzklasse für die jeweilige, spezifische Fahrsituation bilden, die das vordefinierte Vertrauenslevel erfüllt. Ferner kann vorgesehen sein, dass die Eingangsdaten eine endliche Variationszahl umfassen. Beispielsweise können Bilddaten der Eingangsdaten mit 256 Farben erfasst werden. Insbesondere wenn die Auswertung der Eingangsdaten farbbasiert erfolgt, kann beispielsweise jede der Auswerteeinheiten zum Auswerten einer der Farben ausgebildet sein. Dadurch kann sogar eine insbesondere vollständige Sicherheit beim Auswerten durch die priorisierte Auswerteeinheit erreichbar sein.

Ferner ist bei einem erfindungsgemäßen Verfahren vorteilhafterweise vorgesehen, dass bei dem Verfahren Folgendes ausgeführt wird:
- Erfassen von Zusatzdaten zur Spezifizierung der aktuellen Fahrsituation,
wobei das Erkennen der aktuellen Fahrsituation und/oder das Bestimmen der priorisierten Auswerteeinheit in Abhängigkeit von den Klassifikationsdaten und den Zusatzdaten erfolgt. Die Zusatzdaten können weitere Parameter der aktuellen Fahrsituation und/oder des Fahrzeugs umfassen. Dabei können die Zusatzdaten dynamische Daten und/oder statische Daten umfassen. Die Zusatzdaten können beispielsweise durch eine Sensorik des Fahrzeugs, durch eine Logikeinheit des Steuerungssystems und/oder durch einen Server bereitgestellt werden. Durch die Zusatzdaten kann die aktuelle Fahrsituation mit einer höheren Genauigkeit erkannt werden. Weiterhin kann dadurch eine detailliertere Unterteilung der Betriebsumgebung in die Unterklassen ermöglicht werden, um die Spezialisierung der einzelnen Auswerteeinheiten zu erhöhen.

Ferner ist bei einem erfindungsgemäßen Verfahren vorteilhafterweise vorgesehen, dass die Zusatzdaten gemessene Fahrzeugparameter und/oder gemessene Umgebungsdaten der aktuellen Fahrsituation umfassen. Somit können die Zusatzdaten dynamisch in der aktuellen Fahrsituation erfasst werden. Beispielsweise kann das Fahrzeug eine Sensorik zum Messen der Fahrzeugparameter und/oder der Umgebungsdaten aufweisen. Die Fahrzeugparameter können beispielsweise eine Geschwindigkeit des Fahrzeugs, eine Beschleunigung des Fahrzeugs und/oder eine geografische Position, wie eine GPS-Position, des Fahrzeugs umfassen. Die Umgebungsdaten können beispielsweise Kommunikationsdaten einer Kommunikation mit Verkehrsteilnehmern, insbesondere in Form von Car2X-Daten, Wetterdaten, Geländedaten und/oder Verkehrsdaten, wie ein Verkehrsaufkommen oder Verkehrsmeldungen, umfassen. Dadurch kann die aktuelle Fahrsituation beschrieben und für die Auswahl der spezifischen Fahrsituation eingegrenzt werden, um die Komplexität der Eingangsdaten für das Auswerten zu reduzieren und/oder auf ein kleineres Anwendungsgebiet zu begrenzen.

Gemäß der Erfindung weisen die Auswerteeinheiten jeweils zumindest ein künstliches neuronales Netzwerk zum Auswerten der Eingangsdaten auf.

Ferner kann bei einem erfindungsgemäßen Verfahren vorteilhafterweise vorgesehen sein, dass das Erkennen der aktuellen Fahrsituation durch eine Logikeinheit erfolgt. Beispielsweise kann durch die Logikeinheit zum Erkennen der aktuellen Fahrsituation ein Vergleich der Eingangsdaten mit Referenzdaten erfolgen. Insbesondere kann die Logikeinheit zum Abarbeiten einer festen Handlungssequenz, beispielsweise in Form eines Entscheidungsbaums, zum Erkennen der aktuellen Fahrsituation ausgebildet sein. Somit kann vorgesehen sein, dass die Eingangsdaten zunächst anhand vorgegebener Kriterien klassifiziert werden, um anschließend die priorisierte Auswerteeinheit zu bestimmen. Dadurch kann sichergestellt sein, dass das Erkennen der aktuellen Fahrsituation reproduzierbar und insbesondere vollständig nachvollziehbar, d.h. vorzugsweise auch nachweisbar, erfolgt. Alternativ kann das Erkennen der aktuellen Fahrsituation durch ein übergeordnetes künstliches neuronales Netzwerk erfolgen.

Weiterhin ist bei einem erfindungsgemäßen Verfahren vorteilhafterweise vorgesehen, dass die Eingangsdaten zum Erfassen der Klassifikationsdaten, insbesondere durch die Logikeinheit, ausgewertet werden, indem die Eingangsdaten auf charakteristische Daten zur Spezifizierung der aktuellen Fahrsituation überprüft werden. Die Logikeinheit kann die Eingangsdaten zum Erkennen der aktuellen Fahrsituation anhand vordefinierter Kriterien analysieren, um die charakteristischen Daten zu erkennen. Die charakteristischen Daten können vordefinierte Datenelement, beispielsweise in Form von Bildelementen, wie einer Mittelspur zum Erkennen einer zweispurigen Straße, umfassen. Anhand der charakteristischen Daten können die Eingangsdaten zum Bestimmen der priorisierten Auswerteeinheit klassifiziert werden. Dadurch kann eine hohe Zuverlässigkeit beim Bestimmen der priorisierten Auswerteeinheit erreicht werden.

Es ist ferner bei einem erfindungsgemäßen Verfahren denkbar, dass zum Erkennen der aktuellen Fahrsituation ein aktueller Parametersatz erstellt wird, welcher die Klassifikationsdaten und die Zusatzdaten aufweist, wobei der aktuelle Parametersatz zum Bestimmen der priorisierten Auswerteeinheit mit situationsspezifischen Parametersätzen der Trainingsdaten in Hinblick auf die Übereinstimmung verglichen wird. Somit bilden die Klassifikationsdaten und Zusatzdaten insbesondere den Parametersatz zur Beschreibung der aktuellen Fahrsituation. Es kann vorgesehen sein, dass jeder spezifischen Fahrsituation, für welche die Auswerteeinheiten trainiert sind, ein situationsspezifischer Parametersatz zugeordnet ist. Dadurch kann das Bestimmen der priorisierten Auswerteeinheit in einfacher Art und Weise durch die Logikeinheit erfolgen. Es ist denkbar, dass beim Bestimmen der priorisierten Auswerteeinheit eine Auswerteeinheit ausgewählt wird, deren situationsspezifischer Parametersatz vollständig mit dem aktuellen Parametersatz übereinstimmt oder deren situationsspezifischer Parametersatz die größte Übereinstimmung mit dem aktuellen Parametersatz aufweist.

Vorzugsweise kann bei einem erfindungsgemäßen Verfahren vorgesehen sein, dass das Steuerungssystem in das Fahrzeug, insbesondere vollständig, integriert ist und/oder, dass die sicherheitsrelevante Funktion zum, insbesondere vollständig, autonomen Betreiben des Fahrzeugs dient. Es kann vorgesehen sein, dass das Steuerungssystem mit den Auswerteeinheiten in ein, insbesondere zentrales Steuergerät, des Fahrzeuges integriert ist. Zum autonomen Betreiben des Fahrzeugs kann die sicherheitsrelevante Funktion beispielsweise eine Lenkung und/oder Beschleunigung des Fahrzeugs umfassen. Durch die Integration des Steuerungssystems in das Fahrzeug kann die sicherheitsrelevante Funktion auch bei einem Abriss einer Kommunikation des Fahrzeugs mit einem Server sicher ausgeführt werden. Insbesondere, wenn die sicherheitsrelevante Funktion zum autonomen Betreiben des Fahrzeugs ausgebildet ist, kann dadurch ein hohes Maß an Sicherheit erreicht und ein Kontrollverlust des Fahrzeuges in Abhängigkeit von der Kommunikationsverbindung vermieden werden.

Gemäß einem weiteren Aspekt der Erfindung ist ein Computerprogrammprodukt vorgesehen. Das Computerprogrammprodukt umfasst Befehle, die bei einer Ausführung durch ein Steuerungssystem das Steuerungssystem veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Gemäß einem weiteren Aspekt der Erfindung ist ein Fahrzeug vorgesehen. Das Fahrzeug weist eine Funktionseinheit zum Ausführen einer sicherheitsrelevanten Funktion des Fahrzeugs auf. Weiterhin umfasst das Fahrzeug ein Steuerungssystem mit mehreren Auswerteeinheiten zum Auswerten von Eingangsdaten für die sicherheitsrelevante Funktion durch künstliche neuronale Netzwerke. Die Auswerteeinheiten sind durch Trainingsdaten zumindest bis zu einem vordefinierten Vertrauenslevel jeweils für eine spezifische Fahrsituation trainiert.

Somit bringt ein erfindungsgemäßes Fahrzeug die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Die Funktionseinheit kann beispielsweise ein Fahrassistenzsystem umfassen. Weiterhin kann vorgesehen sein, dass es sich bei dem Fahrzeug um ein autonom betreibbares Fahrzeug handelt, wobei die sicherheitsrelevante Funktion eine autonome Fahrfunktion umfasst. Durch das vordefinierte Vertrauenslevel kann das autonome Fahren auf einem hohen Sicherheitsniveau ermöglicht werden. Es ist denkbar, dass die Funktionseinheit separat zu dem Steuerungssystem vorgesehen ist oder in das Steuerungssystem integriert ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Figur 1: ein Steuerungssystem zum Ausführen eines erfindungsgemäßen Verfahrens in einem ersten Ausführungsbeispiel,
- Figur 2: ein Training von Auswerteeinheiten des Steuerungssystems,
- Figur 3: ein Vertrauenslevel der Auswerteeinheiten,
- Figur 4: Verfahrensschritte des Verfahrens in schematischer Darstellung, und
- Figur 5: ein erfindungsgemäßes Fahrzeug mit dem Steuerungssystem.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

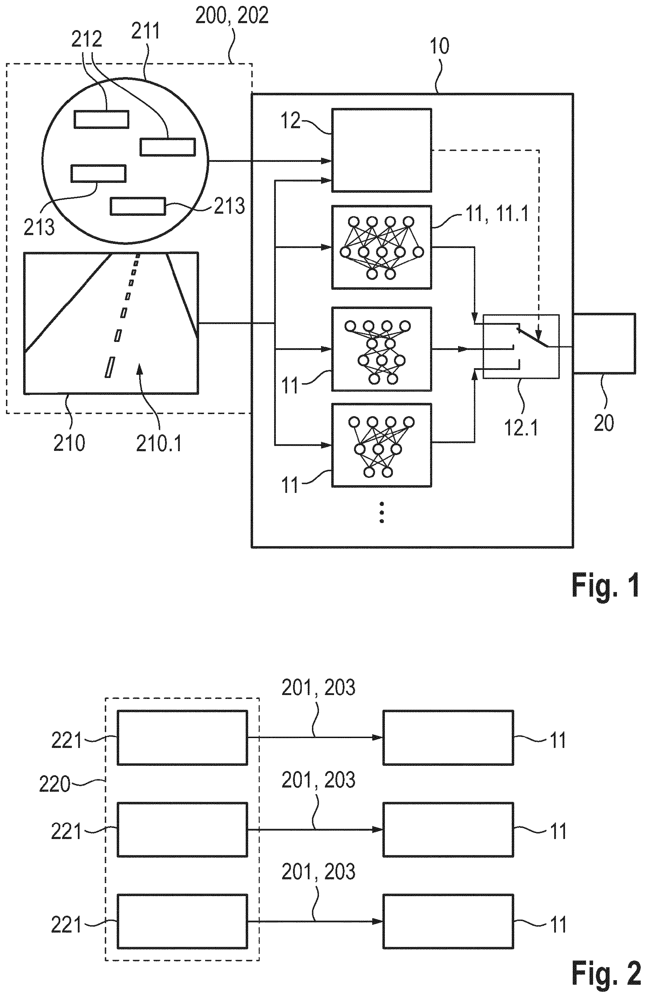

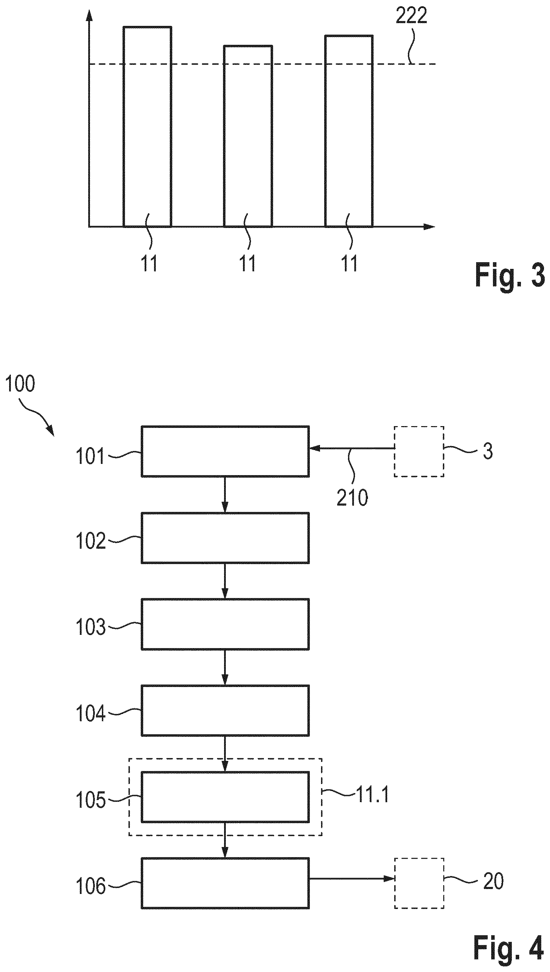

Figur 1 zeigt ein Steuerungssystem 10 zum Ausführen eines erfindungsgemäßen Verfahrens 100 zum Ausführen 106 einer sicherheitsrelevanten Funktion eines Fahrzeuges 1 in einer aktuellen Fahrsituation 200 des Fahrzeuges 1 in Abhängigkeit von Eingangsdaten 210 in einem ersten Ausführungsbeispiel. Eine Abfolge von Verfahrensschritten des Verfahrens 100 ist schematisch in Figur 4 dargestellt. Es kann vorgesehen sein, dass das Verfahren 100 durch ein erfindungsgemäßes Computerprogrammprodukt ausgeführt wird, welches Befehle umfasst, die bei einer Ausführung durch das Steuerungssystem 10, das Steuerungssystem 10 veranlassen, das Verfahren 100 auszuführen.

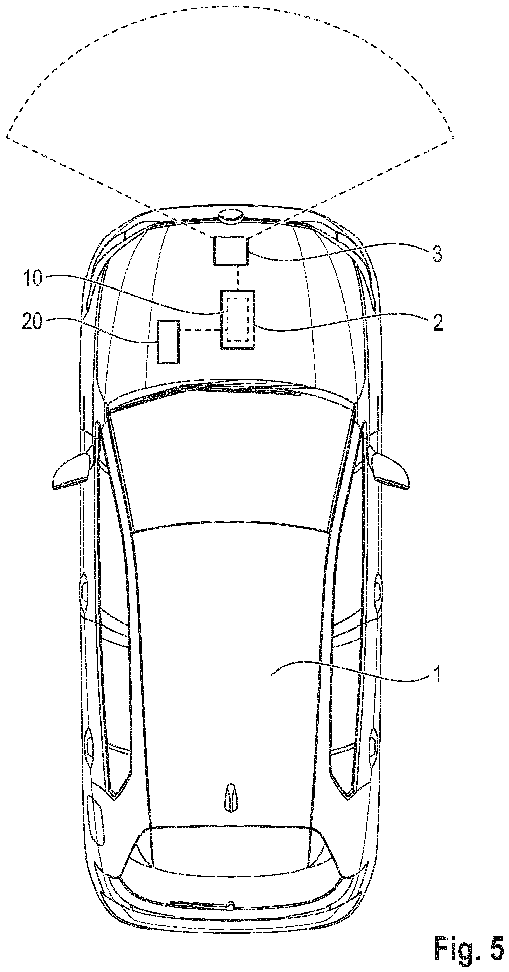

Vorzugsweise ist das Steuerungssystem 10 ferner vollständig in ein erfindungsgemäßes Fahrzeug 1, wie in Figur 5 dargestellt, integriert. Dazu kann das Steuerungssystem 10 in ein Steuergerät 2 des Fahrzeuges 1 integriert sein. Alternativ ist es jedoch ebenso denkbar, dass das Steuerungssystem 10 zumindest teilweise einen Server umfasst. Das Fahrzeug 1 umfasst ferner eine Funktionseinheit 20 zum Ausführen 106 der sicherheitsrelevanten Funktion. Beispielsweise kann die Funktionseinheit 20 eine Steuereinheit zum autonomen Betreiben des Fahrzeugs 1, wie z.B. zum Durchführen einer autonomen Fahrfunktion, umfassen.

Die Eingangsdaten 210 können vorteilhafterweise durch eine Fahrzeugsensorik 3, wie z.B. eine Fahrzeugkamera, des Fahrzeugs 1 erfasst werden. Das Steuerungssystem 10 umfasst eine Logikeinheit 12, durch welche ein Erfassen 101 von Klassifikationsdaten 210.1 der Eingangsdaten 210 erfolgt. Dazu können die Eingangsdaten 210 durch die Logikeinheit 12 ausgewertet werden, indem die Eingangsdaten 210 auf charakteristische Daten zur Spezifizierung der aktuellen Fahrsituation 200 überprüft werden. Im in Figur 1 dargestellten Ausführungsbeispiel können beispielsweise Fahrbahnmarkierungen beim Erfassen 101 der Klassifikationsdaten 210.1 erkannt werden. Ferner können die Klassifikationsdaten 210.1 beispielsweise Informationen über einen Gegenverkehr, am Fahrbahnrand parkende Fahrzeuge 1, eine Beschaffenheit und/oder Klassifikation des Untergrundes und/oder des Fahrgebietes, wie z.B. eine Autobahn oder ein verkehrsberuhigtes Gebiet, umfassen.

Weiterhin erfolgt ein Erfassen 102 von Zusatzdaten 211 zur Spezifizierung der aktuellen Fahrsituation 200, insbesondere durch die Fahrzeugsensorik 3, die Logikeinheit 12 und/oder eine Kommunikationseinheit zum Erhalt der Zusatzdaten 211 von einem Server. Die Zusatzdaten 211 können vorzugsweise gemessene Fahrzeugparameter 212 und/oder gemessene Umgebungsdaten 213 der aktuellen Fahrsituation 200 umfassen.

Anschließend erfolgt ein Erkennen 103 der aktuellen Fahrsituation 200 in Abhängigkeit von den Klassifikationsdaten 210.1 und von den Zusatzdaten 211. Um die aktuelle Fahrsituation 200 zu beschreiben, kann zum Erkennen 103 der aktuellen Fahrsituation 200 ein aktueller Parametersatz 202 erstellt werden, welcher die Klassifikationsdaten 210.1 und die Zusatzdaten 211 aufweist. Beispielsweise können die Zusatzdaten 211 eine Geschwindigkeit des Fahrzeugs 1, eine Beschleunigung des Fahrzeugs 1, eine geografische Position des Fahrzeugs 1, Kommunikationsdaten einer Kommunikation mit Verkehrsteilnehmern, Wetterdaten, Geländedaten und/oder Verkehrsdaten umfassen. Der aktuelle Parametersatz 202 kann insbesondere Messwerte und/oder interpretierte Informationen der Klassifikationsdaten 210.1 und der Zusatzdaten 211 umfassen.

Um eine vorhersagbare und/oder vollständig nachvollziehbare Reproduzierbarkeit beim Erfassen 101 von Klassifikationsdaten 210.1 und/oder beim Erkennen 103 der aktuellen Fahrsituation 200 zu ermöglichen, ist die Logikeinheit 12 zum Ausführen einer vordefinierten Handlungssequenz ausgebildet.

Anschließend erfolgt ein Bestimmen 104 einer priorisierten Auswerteeinheit 11.1 aus mehreren Auswerteeinheiten 11 des Steuerungssystems 10. Dazu umfasst das Steuerungssystem 10 ferner mehrere Auswerteeinheiten 11 zum Auswerten 105 der Eingangsdaten 210 durch künstliche neuronale Netzwerke. Beispielsweise weisen die Auswerteeinheiten 11 jeweils zumindest ein künstliches neuronales Netzwerk auf. Alle Auswerteeinheiten 11 sind durch Trainingsdaten zumindest bis zu einem vordefinierten Vertrauenslevel 222 jeweils für eine spezifische Fahrsituation 201 trainiert, wie in Figur 3 dargestellt. Wie in Figur 2 dargestellt, ist eine Betriebsumgebung 220 zum Ausführen 106 der sicherheitsrelevanten Funktion definiert, welche in Unterklassen 221 zur Definition der spezifischen Fahrsituationen 201 mit dem vordefinierten Vertrauenslevel 222 anhand von Variationen innerhalb der Betriebsumgebung 220 unterteilt ist. Die Betriebsumgebung 220 kann vorzugsweise alle möglichen Ereignisse und/oder Formen der Eingangsdaten 210 umfassen. Beispielsweise kann die Betriebsumgebung 220 das Fahren auf einer asphaltierten Straße sein, wobei die Unterklassen 221 durch eine zweispurige Straße, eine Autobahn, eine Einbahnstraße und/oder dergleichen gebildet sein können. Dadurch kann die Betriebsumgebung 220 durch die Unterklassen 221 in abstrakter Weise insbesondere vollständig unterteilt sein, um den Eingaberaum der Eingangsdaten 210 zu segmentieren. Die Trainingsdaten der Auswerteeinheiten 11 sind jeweils einer der Unterklassen 221 zugeordnet, wodurch die Betriebsumgebung 220 durch die Auswerteeinheiten 11 insbesondere vollständig abgebildet sein kann. Zum Bestimmen 104 der priorisierten Auswerteeinheit 11.1 kann der aktuelle Parametersatz 202 mit situationsspezifischen Parametersätzen 203 der Trainingsdaten in Hinblick auf die Übereinstimmung verglichen werden.

Die priorisierte Auswerteeinheit 11.1 ist dabei für eine der spezifischen Fahrsituationen 201 trainiert, die eine Übereinstimmung mit der aktuellen Fahrsituation 200 aufweist. Durch die priorisierte Auswerteeinheit 11.1 erfolgt daraufhin ein Auswerten 105 der Eingangsdaten 210 für die sicherheitsrelevante Funktion. Insbesondere kann die priorisierte Auswerteeinheit 11.1 durch ein Umschaltmodul 12.1, vorzugsweise der Logikeinheit 12, zum Auswerten 105 der Eingangsdaten 210 angesteuert werden. Beispielsweise kann beim Auswerten 105 der Eingangsdaten 210 ein Bewegungspfad von Verkehrsteilnehmern erkannt und/oder ein Bewegungspfad des Fahrzeugs 1 berechnet werden. In Abhängigkeit von dem Auswerten 105 der Eingangsdaten 210 erfolgt daraufhin ein Ausführen 106 der sicherheitsrelevanten Funktion.

Dabei kann die Funktionseinheit 20 beispielsweise zum Durchführen der sicherheitsrelevanten Funktion angesteuert werden.

Durch das gemeinsame Vertrauenslevel 222 als Mindestparameter für alle Auswerteeinheiten 11, ist insbesondere sichergestellt, dass das Auswerten 105 der Eingangsdaten 210 zumindest auf dem Niveau des Vertrauenslevels 222, beispielsweise für eine autonome Fahrfunktion des Fahrzeugs 1, erfolgt. Durch die Spezialisierungen der Auswerteeinheiten 11 auf die spezifischen Fahrsituationen 201 können die Eingangsdaten 210 somit situationsspezifisch ausgewertet werden, wodurch die einzelnen spezifischen Fahrsituationen 201 eine reduzierte Komplexität aufweisen. Durch das vordefinierte Vertrauenslevel 222 kann insbesondere das autonome Fahren auf einem hohen Sicherheitsniveau ermöglicht werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Steuergerät
- 3: Fahrzeugsensorik

- 10: Steuerungssystem
- 11: Auswerteeinheiten
- 11.1: priorisierte Auswerteeinheit
- 12: Logikeinheit
- 12.1: Umschaltmodul

- 20: Funktionseinheit

- 100: Verfahren
- 101: Erfassen von 210.1
- 102: Erfassen von 211
- 103: Erkennen von 200
- 104: Bestimmen von 11.1
- 105: Auswerten von 210
- 106: Ausführen durch 2

- 200: aktuelle Fahrsituation
- 201: spezifische Fahrsituation
- 202: aktueller Parametersatz
- 203: situationsspezifischer Parametersätzen

- 210: Eingangsdaten
- 210.1: Klassifikationsdaten
- 211: Zusatzdaten

- 220: Betriebsumgebung
- 221: Unterklasse
- 222: Vertrauenslevel

## Patentansprüche

1. Verfahren (100) zum Ausführen einer sicherheitsrelevanten Funktion eines Fahrzeuges (1) in einer aktuellen Fahrsituation (200) des Fahrzeuges (1) in Abhängigkeit von Eingangsdaten (210),
wobei die Eingangsdaten (210) Sensordaten des Fahrzeugs zur Analyse der aktuellen Fahrsituation umfassen,
wobei die Eingangsdaten (210) durch ein Steuerungssystem (10) mit mehreren Auswerteeinheiten (11) auswertbar sind,
wobei die Auswerteeinheiten (11) jeweils zumindest ein künstliches neuronales Netzwerk zum Auswerten (105) der Eingangsdaten (210) aufweisen,
wobei die Auswerteeinheiten (11) durch Trainingsdaten zumindest bis zu einem vordefinierten Vertrauenslevel (222) jeweils für eine spezifische Fahrsituation (201) trainiert sind,
wobei das Vertrauenslevel (222) zu einer Anforderung der sicherheitsrelevanten Funktion korreliert,
wobei bei dem Verfahren (100) Folgendes ausgeführt wird:
- Erfassen (101) von Klassifikationsdaten (210.1) der Eingangsdaten (210), wobei die Klassifikationsdaten (210.1) eine Teilmenge der Eingangsdaten (210) umfassen,
wobei die Eingangsdaten (210) zum Erfassen (101) der Klassifikationsdaten (210.1) ausgewertet werden, indem die Eingangsdaten (210) auf charakteristische Daten zur Spezifizierung der aktuellen Fahrsituation (200) überprüft werden,
- Erfassen (102) von Zusatzdaten (211) zur Spezifizierung der aktuellen Fahrsituation (200),
wobei die Zusatzdaten (211) gemessene Fahrzeugparameter (212) und/oder gemessene Umgebungsdaten (213) der aktuellen Fahrsituation (200) umfassen,
- Erkennen (103) der aktuellen Fahrsituation (200) in Abhängigkeit von den Klassifikationsdaten (210.1),
- Bestimmen (104) einer priorisierten Auswerteeinheit (11.1) der Auswerteeinheiten (11), welche für eine spezifische Fahrsituation (201) trainiert ist, die eine Übereinstimmung mit der aktuellen Fahrsituation (200) aufweist,
- wobei das Erkennen (103) der aktuellen Fahrsituation (200) und/oder das Bestimmen (104) der priorisierten Auswerteeinheit (11.1) in Abhängigkeit von den Klassifikationsdaten (210.1) und den Zusatzdaten (211) erfolgt,
- Auswerten (105) der Eingangsdaten (210) durch die priorisierte Auswerteeinheit (11.1),
- Ausführen (106) der sicherheitsrelevanten Funktion in Abhängigkeit von dem Auswerten (105) der Eingangsdaten (210).

2. Verfahren (100) nach Anspruch 1,
**dadurch gekennzeichnet,**
**dass** eine Betriebsumgebung (220) zum Ausführen der sicherheitsrelevanten Funktion definiert ist, welche in Unterklassen (221) zur Definition der spezifischen Fahrsituationen (201) mit dem vordefinierten Vertrauenslevel (222) anhand von Variationen innerhalb der Betriebsumgebung (220) unterteilt ist, wobei die Trainingsdaten der Auswerteeinheiten (11) jeweils einer der Unterklassen (221) zugeordnet sind.

3. Verfahren (100) nach einem der vorhergehenden Ansprüche,
**dadurch gekennzeichnet,**
**dass** das Erkennen (103) der aktuellen Fahrsituation (200) durch eine Logikeinheit (12) erfolgt.

4. Verfahren (100) nach einem der vorhergehenden Ansprüche,
**dadurch gekennzeichnet,**
**dass** zum Erkennen (103) der aktuellen Fahrsituation (200) ein aktueller Parametersatz (202) erstellt wird, welcher die Klassifikationsdaten (210.1) und die Zusatzdaten (211) aufweist, wobei der aktuelle Parametersatz (202) zum Bestimmen (104) der priorisierten Auswerteeinheit (11.1) mit situationsspezifischen Parametersätzen (203) der Trainingsdaten in Hinblick auf die Übereinstimmung verglichen wird.

5. Verfahren (100) nach einem der vorhergehenden Ansprüche,
**dadurch gekennzeichnet,**
**dass** das Steuerungssystem (10) in das Fahrzeug (1) integriert ist und/oder, dass die sicherheitsrelevante Funktion zum autonomen Betreiben des Fahrzeugs (1) dient.

6. Computerprogrammprodukt umfassend Befehle, die bei einer Ausführung durch ein Steuerungssystem (10) das Steuerungssystem (10) veranlassen, ein Verfahren (100) nach einem der vorhergehenden Ansprüche auszuführen.

7. Fahrzeug (1) aufweisend
eine Funktionseinheit (20) zum Ausführen einer sicherheitsrelevanten Funktion des Fahrzeugs (1) nach einem der vorhergehenden Ansprüche, und ein Steuerungssystem (10) mit mehreren Auswerteeinheiten (11) zum Auswerten (105) von Eingangsdaten (210) für die sicherheitsrelevante Funktion durch künstliche Intelligenz, wobei die Auswerteeinheiten (11) durch Trainingsdaten zumindest bis zu einem vordefinierten Vertrauenslevel (222) jeweils für eine spezifische Fahrsituation (201) trainiert sind.

## Claims

1. Method (100) for executing a safety-critical function of a vehicle (1) in a current driving situation (200) of the vehicle (1) depending on input data (210),
wherein the input data (210) include sensor data from the vehicle for analyzing the current driving situation,
wherein the input data (210) can be evaluated by a control system (10) having a plurality of evaluation units (11),
wherein the evaluation units (11) each have at least one artificial neural network for evaluating (105) the input data (210),
wherein the evaluation units (11) are trained by training data at least up to a predefined confidence level (222) for each specific driving situation (201),
wherein the confidence level (222) correlates with a requirement of the safety-critical function,
wherein the following is carried out in the method (100):
- acquiring (101) classification data (210.1) relating to the input data (210), wherein the classification data (210.1) comprise a subset of the input data (210),
wherein the input data (210) are evaluated to acquire (101) the classification data (210.1) by checking the input data (210) for characteristic data to specify the current driving situation (200),
- acquiring (102) additional data (211) to specify the current driving situation (200),
wherein the additional data (211) include measured vehicle parameters (212) and/or measured environmental data (213) relating to the current driving situation (200),
- identifying (103) the current driving situation (200) depending on the classification data (210.1),
- determining (104) a prioritized evaluation unit (11.1) of the evaluation units (11) which is trained for a specific driving situation (201) that matches the current driving situation (200),
- wherein identifying (103) the current driving situation (200) and/or determining (104) the prioritized evaluation unit (11.1) is carried out depending on the classification data (210.1) and the additional data (211),
- evaluating (105) the input data (210) by the prioritized evaluation unit (11.1),
- executing (106) the safety-critical function depending on the evaluation (105) of the input data (210).

2. Method (100) according to claim 1,
**characterized in that**
an operating environment (220) is defined for executing the safety-critical function and is subdivided into subclasses (221) for defining the specific driving situations (201) having the predefined confidence level (222) based on variations within the operating environment (220), the training data of the evaluation units (11) each being assigned to one of the subclasses (221).

3. Method (100) according to any of the preceding claims,
**characterized in that**
identifying (103) the current driving situation (200) is carried out by a logic unit (12).

4. Method (100) according to any of the preceding claims,
**characterized in that**,
in order to identify (103) the current driving situation (200), a current parameter set (202) is created, which comprises the classification data (210.1) and the additional data (211), in order to determine (104) the prioritized evaluation unit (11.1), the current parameter set (202) being compared with situation-specific parameter sets (203) of the training data with regard to matching.

5. Method (100) according to any of the preceding claims**,**
**characterized in that**
the control system (10) is integrated into the vehicle (1) **and/or in that** the safety-critical function is intended for autonomous operation of the vehicle (1).

6. Computer program product comprising commands which, when executed by a control system (10), prompt the control system (10) to carry out a method (100) according to any of the preceding claims.

7. Vehicle (1) comprising
a functional unit (20) for executing a safety-critical function of the vehicle (1) according to any of the preceding claims, and
a control system (10) having several evaluation units (11) for evaluating (105) input data (210) for the safety-critical function by means of artificial intelligence, wherein the evaluation units (11) are trained by training data at least up to a predefined confidence level (222) for each specific driving situation (201).

## Revendications

1. Procédé (100) permettant d'exécuter une fonction relative à la sécurité d'un véhicule (1) dans une situation de conduite actuelle (200) du véhicule (1) en fonction de données d'entrée (210),
dans lequel les données d'entrée (210) comprennent des données de capteur du véhicule pour l'analyse de la situation de conduite actuelle,
dans lequel les données d'entrée (210) peuvent être évaluées par un système de commande (10) comportant plusieurs unités d'évaluation (11),
dans lequel les unités d'évaluation (11) présentent respectivement au moins un réseau neuronal artificiel permettant d'évaluer (105) les données d'entrée (210),
dans lequel les unités d'évaluation (11) sont entraînées à l'aide de données d'entraînement au moins jusqu'à un niveau de confiance (222) prédéfini respectivement pour une situation de conduite spécifique (201),
dans lequel le niveau de confiance (222) est corrélé à une exigence de la fonction relative à la sécurité,
dans lequel les étapes suivantes sont exécutées dans le procédé (100) :
- collecte (101) de données de classification (210.1) des données d'entrée (210), dans lequel les données de classification (210.1) comprennent un sous-ensemble des données d'entrée (210),
dans lequel les données d'entrée (210) sont évaluées en vue de la collecte (101) des données de classification (210.1), en vérifiant si les données d'entrée (210) contiennent des données caractéristiques permettant de préciser la situation de conduite actuelle (200),
- collecte (102) de données supplémentaires (211) permettant de préciser la situation de conduite actuelle (200),
dans lequel les données supplémentaires (211) comprennent des paramètres de véhicule (212) mesurés et/ou des données d'environnement (213) mesurées de la situation de conduite actuelle (200),
- détection (103) de la situation de conduite actuelle (200) en fonction des données de classification (210.1),
- détermination (104) d'une unité d'évaluation prioritaire (11.1) parmi les unités d'évaluation (11), laquelle est entraînée pour une situation de conduite spécifique (201) présentant une correspondance avec la situation de conduite actuelle (200),
- dans lequel la détection (103) de la situation de conduite actuelle (200) et/ou la détermination (104) de l'unité d'évaluation prioritaire (11.1) s'effectuent en fonction des données de classification (210.1) et des données supplémentaires (211),
- évaluation (105) des données d'entrée (210) par l'unité d'évaluation prioritaire (11.1),
- exécution (106) de la fonction relative à la sécurité en fonction de l'évaluation (105) des données d'entrée (210).

2. Procédé (100) selon la revendication 1,
**caractérisé en ce**
**qu'**un environnement de fonctionnement (220) est défini pour l'exécution de la fonction relative à la sécurité, lequel environnement de fonctionnement est subdivisé en sous-classes (221) permettant de définir les situations de conduite spécifiques (201) avec le niveau de confiance (222) prédéfini sur la base de variations au sein de l'environnement de fonctionnement (220), dans lequel les données d'entraînement des unités d'évaluation (11) sont respectivement associées à l'une des sous-classes (221).

3. Procédé (100) selon l'une des revendications précédentes,
**caractérisé en ce**
**que** la détection (103) de la situation de conduite actuelle (200) est effectuée par une unité logique (12).

4. Procédé (100) selon l'une des revendications précédentes,
**caractérisé en ce**
**qu**'un jeu de paramètres actuels (202), présentant les données de classification (210.1) et les données supplémentaires (211), est créé pour la détection (103) de la situation de conduite actuelle (200), dans lequel le jeu de paramètres actuels (202) est comparé, pour la détermination (104) de l'unité d'évaluation prioritaire (11.1), à des jeux de paramètres spécifiques à la situation (203) des données d'entraînement, afin de vérifier leur correspondance.

5. Procédé (100) selon l'une des revendications précédentes,
**caractérisé en ce**
**que** le système de commande (10) est intégré au véhicule (1) et/ou **en ce que** la fonction relative à la sécurité sert à assurer le fonctionnement autonome du véhicule (1).

6. Produit programme d'ordinateur, comprenant des instructions qui, lorsqu'elles sont exécutées par un système de commande (10), amènent le système de commande (10) à exécuter un procédé (100) selon l'une des revendications précédentes.

7. Véhicule (1) présentant
une unité fonctionnelle (20) destinée à exécuter une fonction relative à la sécurité du véhicule (1) selon l'une des revendications précédentes, et
un système de commande (10) comportant plusieurs unités d'évaluation (11) permettant d'évaluer (105) des données d'entrée (210) pour la fonction relative à la sécurité à l'aide de l'intelligence artificielle, dans lequel les unités d'évaluation (11) sont entraînées à l'aide de données d'entraînement au moins jusqu'à un niveau de confiance (222) prédéfini, respectivement pour une situation de conduite spécifique (201).
